# EUROPEAN PATENT SPECIFICATION

(11) **EP 0 945 008 B1**
(45) Date of publication and mention of the grant of the patent: **10.03.2004**
(21) Application number: 97949847.4
(22) Date of filing: 16.12.1997
(51) Int. Cl.: H04N 5/74

(54) **LIGHT SHIELD FOR IMAGE REPRODUCTION DEVICES PLACED NEXT TO AND/OR ABOVE ONE ANOTHER**
LICHTABSCHIRMUNG FÜR NEBEN- ODER ÜBEREINANDER ANGEORDNETE BILDWIEDERGABEEINRICHTUNGEN
DISPOSITIF DE PROTECTION CONTRE LA LUMIERE POUR APPAREILS DE REPRODUCTION D'IMAGES CONTIGUS ET/OU SUPERPOSES

(30) Priority: 17.12.1996 BE 9601054
(43) Date of publication of application: 29.09.1999
(73) Proprietor: Barco N.V., 8500 Kortrijk (BE)
(72) Inventor: DECOCK, Johan, B-8550 Zwevegem (BE)
(74) Representative: Bird, Ariane
(86) International application number: PCT/BE1997/000137
(87) International publication number: WO 1998/027726

(56) References cited:
- EP-A- 0 331 847
- EP-A- 0 486 789
- EP-A- 0 523 427
- EP-A- 0 650 295
- WO-A-90/07886
- DE-U- 8 911 547
- US-A- 3 661 434
- US-A- 4 123 129

## Description

The present invention relates to a modular, convertible light shield for image reproduction devices which comprise projectors and screens, an image being projected onto the rear side of a screen with the aid of a projector. The field of application is that of modular multi-screen displays.

With a multi-screen display of this kind, the viewer is situated in front of the screens, which are positioned next to and/or above one another, optionally at an angle, with the result that they form an image surface onto which an image, optionally composed of a plurality of subimages, can be projected. A subimage may cover one or more screens of the image surface and may appear at any desired location on the image surface. These subimages may be projected dependently or independently. The images may be moving or stationary.

In the case of modular multi-screen displays, there are the same number of projectors (at least two) as screens, for projecting images onto the screens. The arrangement of the screens allows them to form a surface in the space between the projectors and the viewer. Light which is incident on a screen on the projector side but does not emanate from the projector which is projecting an image onto that screen, but rather from a different projector or from the environment, has an adverse effect on the image perceived by the viewer. By making use of the light shield according to the present invention, this light is very minor or nonexistent.

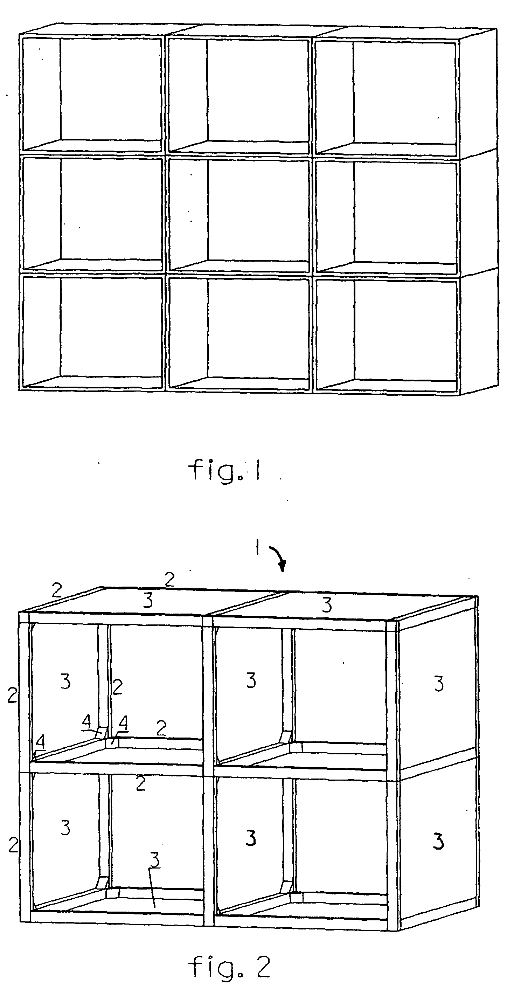

In practice, modular multi-screen displays are known which are provided with a light shield between the various image reproduction devices, for example from EP-A1-0,650,295 or DE-U1-8911547.3. The basic principle of existing modular light shields is always the same. The conventional convertible multi-screen display is constructed by stacking a number of identical basic units on top of and/or next to one another. Each of the basic units is composed of:
- a light shield, comprising a top wall and a bottom wall, two side walls and possibly a rear wall (cf. Figure 1),
- a screen which is either fixedly or removably mounted on the light shield and is mounted either before or after the multi-screen display is set up, and
- a projector which is mounted in advance entirely or partially in the light shield, optionally in such a manner that it can slide out, and is mounted before or after the multi-screen display is set up.

A light shield as outlined above is, as it were, a type of box, with an inner edge and an outer edge. The light beams emanating from the projector, which together with the light shield form a basic unit, are guided by the inner edge of the light shield so that they reach the rear side of the corresponding screen. The rear side of the screen is that side which is situated on the projector side, and thus not on the viewer side.

Between the inner edges of two adjacent basic units of a conventional multi-screen display there are situated in each case two light shield walls: one belonging to each basic unit. If two such basic units are stacked on top of one another, these walls are the top wall of the bottom unit and the bottom wall of the top unit; if they are stacked next to one another, these walls are the left-hand wall of the right-hand basic unit and the right-hand wall of the left-hand basic unit. Only one wall is required in order to provide suitable light shielding. The presence of two light shield walls is not only a waste of material but also results in surplus weight of the complete arrangement. This extra weight also has to be transported, thus entailing extra transport costs.

Large amounts of space are required for packaging and dispatching the basic units, since each basic unit has to be packaged as a unit, optionally with the projector inside.

Known multi-screen displays are constructed by stacking the basic units on top of one another. They are fastened together automatically, manually or are not fastened together. If basic units stacked next to one another are not joined together, there is a high risk of vertical gaps appearing. If they are joined together manually, long screws are often used, which are not always as easy to remove.

If a multi-screen display is constructed using the basic units which are known from the prior art, it is only possible to create one or more passages in the multi-screen display, with one or more basic units arranged above a passage, by making use of extra structural elements. These extra structural elements may be a suspension arrangement, a support or extra connections to the adjacent basic unit or units.

From US-3,661,434 is known a unitary modular shelving structure comprised of a plurality of walls. These walls are provided with tongue-like protrusions which can be connected by means of insertable connectors. The walls have a rather complex structure due to the protrusions, and must therefor be made by means of a mould. If a modular shelving structure with other dimensions is desired, other moulds must be made, which is extremely expensive and time consuming, and thus not suited for small series of shelving structures.

The object of designing the present invention is to eliminate the abovementioned drawbacks and to provide a system which is modular and is easy to set up and dismantle.

The modular light shield between image reproduction devices according to the invention is built up by walls, so that only one wall is present between two adjacent image reproduction devices. These walls are kept in position by means of horizontal, vertical and lateral sections, which are each provided with at least one groove in the longitudinal direction. Fastening elements are provided for connecting the sections with each other.

A modular light shield according to the invention can be set up between image reproduction devices in a very simple manner.

Preferably, a base is first constructed from sections, walls and fastening elements and is adjusted until it is completely level. These sections, walls and fastening elements may be pre-assembled in advance to form units. The base can be levelled, for example, by attaching the base of the multi-screen display to vertically adjustable legs.

The complete arrangement of the multi-screen display on the base is preferably constructed using pre-assembled units. The pre-assembled units of the multi-screen display are likewise composed of sections, walls and fastening elements. Vertical, horizontal and lateral sections respectively determine the height and the width of the screens and the depth of a unit.

When setting up the display, the corner connections between sections are made such that, after assembly, the light beams emanating from the projector can reach the complete screen without hindrance. This is possible, inter alia, by not arranging a fastening element directly between a horizontal and a vertical section, but rather by joining both the horizontal and the vertical section to a lateral section. Other fastening means which do not protrude from the section, or do so only to a limited extent, are known to the person skilled in the art and can be used as fastening elements in the present invention.

According to a preferred embodiment, the sections are extruded sections.

According to a preferred embodiment, the cross-section of the sections is substantially square.

Also according to a preferred embodiment, each section is provided with at least one groove on each side in the longitudinal direction of the section. Preferably, these grooves are T-grooves or dovetail grooves.

The walls of the modular light shield between image reproduction devices may be made from sheet material (such as plastic, metal or cardboard), fabric or film. The walls are preferably held in the grooves, between the sections of the light shield.

To this end, the walls are preferably folded aluminium sheets which are fastened between the sections.

It is permissible to fasten the walls against the sections rather than between them if, after constructing the multi-screen display, the light beams emanating from the projectors are able to reach the respective screens completely without hindrance. This can be achieved, inter alia, by providing the sections with a recess into which the walls are set. The wall may then be fastened to the corner connection.

According to the invention, the fastening elements are used to join the various sections together. Obviously, the type of fastening elements used depends on the sections used and on the grooves which are made therein. Preferably, the fastening elements comprise one of the following combinations: 1 corner piece + 2 coach bolts + 2 nuts; 1 corner piece + 2 quick-acting closures; 1 corner piece + 1 quick-acting closure + 1 coach bolt + 1 nut. However, numerous other fastening elements are also possible, such as for example a fastening flange with 2 screws with hexagon sockets and a double sliding nut, which can optionally be screwed in place; 1 corner piece + 2 coach nuts + 2 bolts; 1 corner piece + 1 quick-acting closure + 1 coach nut + 1 bolt; at least 1 screw; at least 1 quick-acting closure; ...

The sections, the walls and the fastening elements may all be well-defined components whose properties are very well known. This is important in order to be able to know how much each connection can support, so that with high structures, if necessary, certain sections can be replaced by similar but stronger sections. In this case, the other structural elements do not have to be changed, or do not have to be changed much.

The various components can be packaged and dispatched either completely separately (CKD) or pre-mounted (SKD). In both cases, everything can be stacked close together, so that a maximum of components can be transported in a minimum of space. This is an important factor in reducing transport costs.

The light shield according to the invention has the significant advantage that it is lightweight, owing to the single partition which shields the light between image reproduction devices which bear against one another.

The light shield is very suitable for renting out, since the installation is easy to set up and dismantle. However, it is also suitable for fixed or semi-fixed installations. The latter are installations which are normally fixed but, for example for major events, are extended or reconfigured. This is because it is very easy to add a row or column to the modular light shield according to the invention.

The light shield is constructed in a modular, rapid and simple manner. It is also simple to dismantle and to convert a certain multi-screen display to a different configuration, all this without damaging the components.

The separate components can be assembled in a simple manner (using a plan, gauge, ...) to form pre-mounted modules or to form a complete wall.

The system may be provided with various possibilities for suspending the arrangement. For example, if the upper horizontal .sections and lateral sections are provided with a T-groove on the top, it is possible, for example, to attach a suspension system comprising eye nuts which are fixed to coach bolts.

Depending on the chosen design of the basic module, the vertical pillars of the display may be constructed completely by vertical sections, without interruption from horizontal or lateral sections. If the vertical sections are provided with a hole, an eye screw or a steel cable may be arranged therein in order to take care of the suspension.

Mounting the screen and the projector directly or indirectly on the light shield results in the desired distance and/or position of the projector with respect to the screen, which is necessary in order to provide optimum image reproduction. This continues to apply prior to mounting and subsequent to dismantling.

In principle, the sections which are situated along the outside of the multi-screen display would not have to be provided with a groove along that side. However, for the sake of simplicity (uniformity of components), preferably they are provided with such a groove. Moreover, the grooves in the horizontal sections on the front can be used for attaching the screens. This results in screens which are easy to attach and detach and are easy to clean, even on the inside.

It is not necessary for there to be a complete wall everywhere between the sections. The wall is sufficiently large as soon as light emanating from a first projector is prevented from being incident on a screen belonging to a second projector. This may allow the walls which form the light shield between two adjacent projectors to be made less deep.

The invention will be described in more detail with reference to the figures, in which
Figure 1 shows a multi-screen display as is found in the prior art,
Figure 2 shows the basic structure of a multi-screen display according to the invention,
Figure 3 shows a perspective sketch of part of an extruded section which is provided with one T-groove in the longitudinal direction on each side of the section,
Figure 4 shows a perspective view of a wall formed by a folded aluminium sheet,
Figure 5 shows a cross-section of an assembly of two sections which are joined together with the aid of a corner piece and coach bolt and nut, a wall being fixed between the two sections; in Figure 5a, this is a wall with raised edges which are fastened in the T-groove; in Figure 5b this is a planar wall which is set in a recess in the section and attached to the corner connections,
Figure 6 shows a perspective view of a corner piece,
Figure 7 shows a coach bolt and associated nut,
Figure 8 shows a perspective view of a first basic module for constructing a multi-screen display: a starter element,
Figure 9 shows a perspective view of a second basic module for constructing a multi-screen display: a horizontal structural element,
Figure 10 shows a perspective view of a third basic module for constructing a multi-screen display: a vertical structural element,
Figure 11 shows a perspective view of a fourth basic module for constructing a multi-screen display: a honeycomb element,
Figure 12 is an example of how a modular light shield according to the invention is constructed with the aid of the basic modules shown in Figures 8 to 11,
Figure 13 shows other possibilities for constructing a modular light shield according to the invention, with the provision that other basic modules be formed; and
Figure 14 shows a modular light shield provided with support surfaces for the projectors.

The modular light shield 1 according to the invention is composed of sections 2, walls 3 and fastening elements 4 (Figure 2). In the embodiment shown, these basic pieces are used to form a modular light shield 1 for a multi-screen display which is two image reproduction devices wide and two image reproduction devices high. Owing to the modular nature of the invention, the arrangement is not limited to 2 x 2 or M x M, but rather M x N (where M and N are integers) or other symmetrical and asymmetrical combinations are possible.

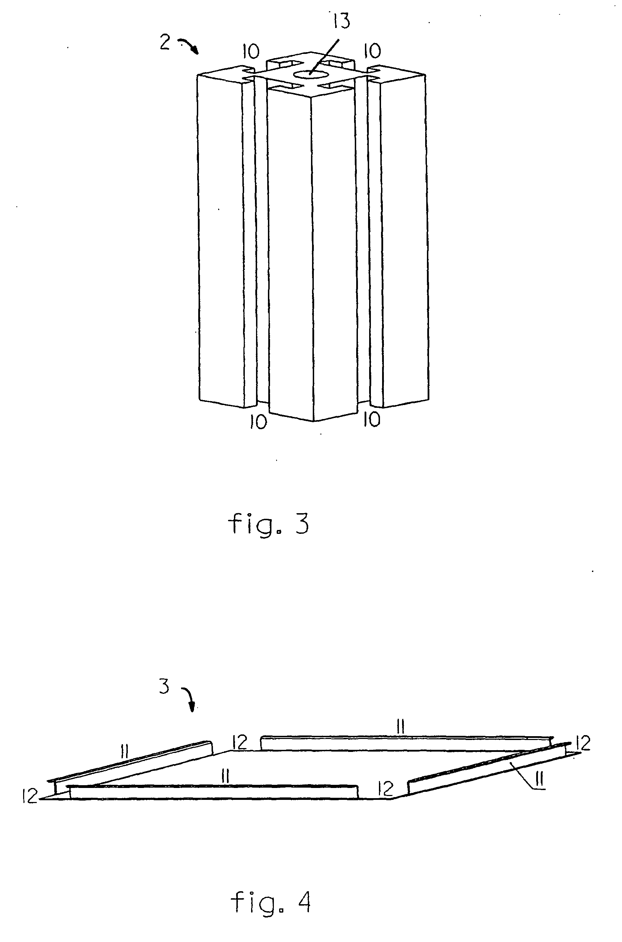

In the embodiment described, the sections 2 are bar-shaped extruded sections (Figure 3), the cross-section of which is substantially square and which are provided with a T-groove 10 on each side in the longitudinal direction of the section 2. An advantage of using extruded sections is that it is not necessary to undertake major changes to the light shields 1 if the dimensions of the image reproduction devices are changed. The same sections 2 can be used, and they simply have to be sawn off to a different length. The extruded section shown in Figure 3 is provided with a hole 13, which if necessary can be used to suspend the multi-screen display.

In the embodiment described, the same extruded sections are used for the horizontal, vertical and lateral sections, where necessary sawn to different lengths.

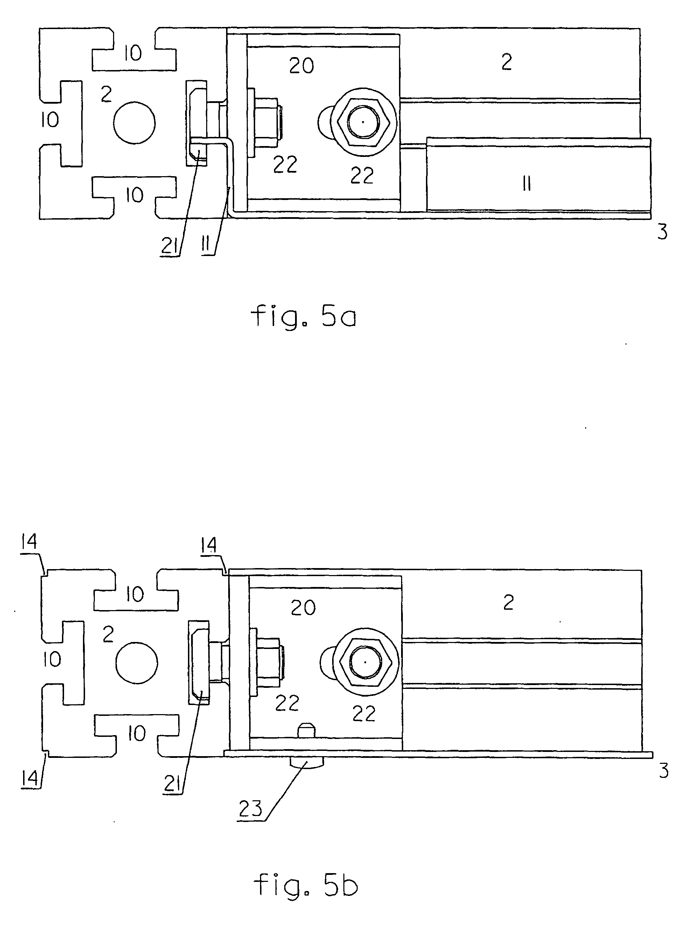

The walls 3 consist of sheet material. The special shape of the wall 3 as shown in Figure 4 allows the wall to be fixed, on the one hand, by the raised edges 11 of the wall 3 in the T-grooves 10 of the sections 2 and, on the other hand, by the corners 12 of the wall 3 behind the fastening elements 4 of the light shield 1 (cf. also Figure 5a).

If a wall 3 is formed by a planar sheet, it can be fastened (cf. Figure 5b) by allowing it to lie in a recess 14 in the section 2. The wall 3 should then be fixed to the fastening elements 4, for example with the aid of screws 23.

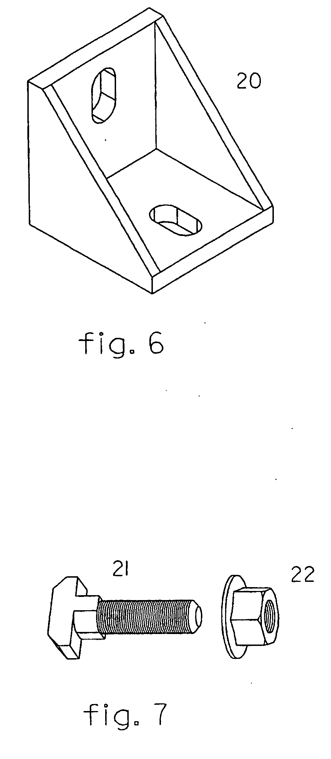

The fastening elements 4 are used to fasten together two sections 2. In the preferred embodiment of the invention as shown in Figure 2, use is made of a corner piece 20, coach bolts 21 and nuts 22 (cf. also Figures 6 and 7). The connections between the various sections can thus be achieved very easily. Other fastening elements for making the desired connections are also commercially available.

The abovementioned basic pieces (sections 2, walls 3 and fastening elements 4) can be assembled in advance, in order to simplify the in situ assembly of a modular light shield 1 and to make this assembly less time-consuming.

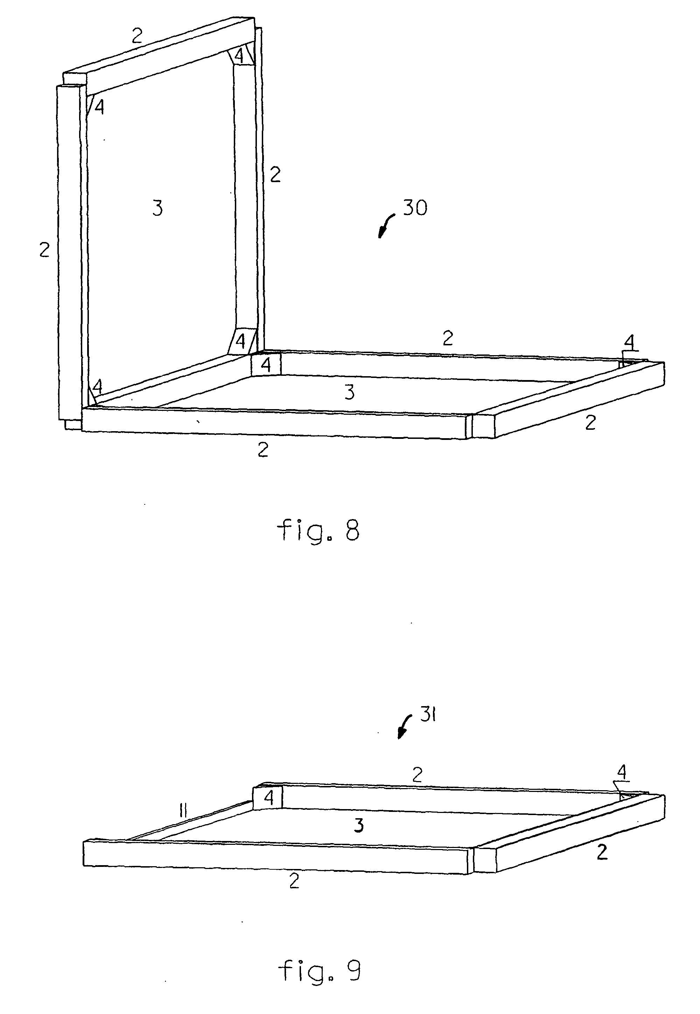

A possible method of pre-assembly is to form the following basic modules: a starter element 30, horizontal structural elements 31, vertical structural elements 32 and honeycomb elements 33 (Figures 8 to 11). For the sake of simplicity of the figures, the grooves 10 are not shown in these figures. The assembly shown in the figures is carried out using folded aluminium sheets, but can also be carried out using planar sheets which are set in recesses.

The starter element 30 (Figure 8) comprises 7 sections 2, which are disposed in such a manner that they form an L, in which the distance between the lateral sections of the upright limb plus the height of one lateral section is equal to the height of an image reproduction device, and in which the distance between the lateral sections of the horizontal limb plus the width of the lateral section is equal to the width of one image reproduction device. Two walls 3, an upright wall and a horizontal wall, are already arranged between the sections 2.

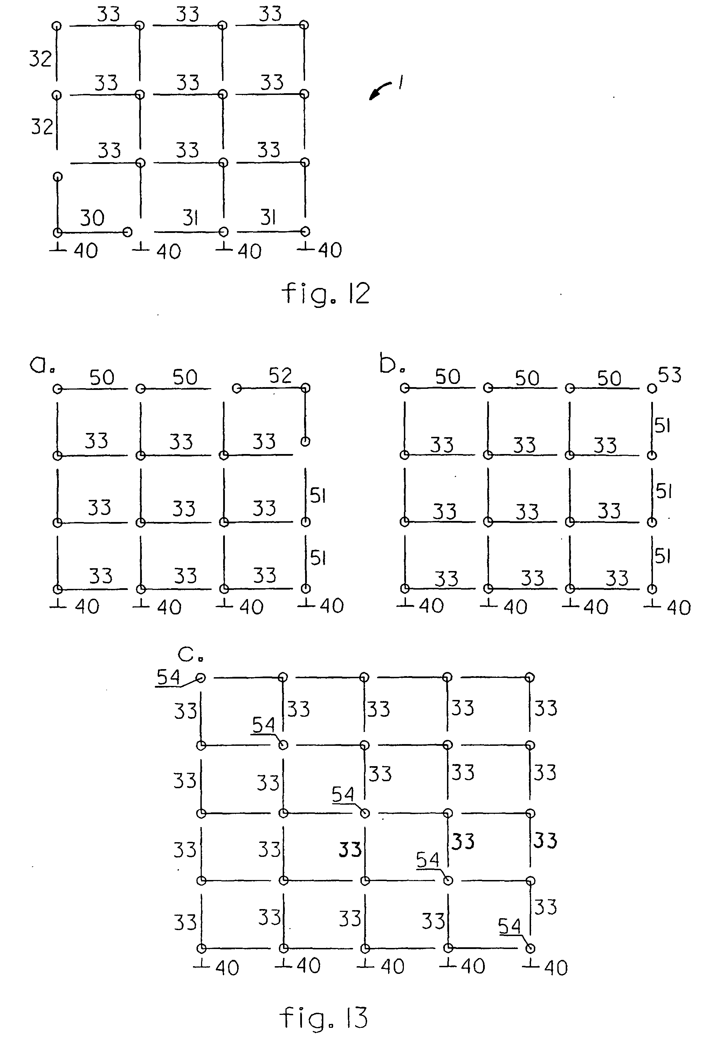

A horizontal structural element 31 (Figure 9) comprises three sections 2, between which a wall 3 is arranged. Three of the four sides of the horizontal structural element 31 are thus closed off by a section 2, while the fourth side is open. This horizontal structural element 31 is intended to be arranged horizontally against a starter element 30 or against another horizontal structural element 31 (Figure 12). Fastening elements 4 are already arranged on the open side of the horizontal structural element 31, so that it can be joined to another basic module easily and quickly by tightening just two nuts 22 (one on each corner piece 20) onto the corresponding coach bolts 21.

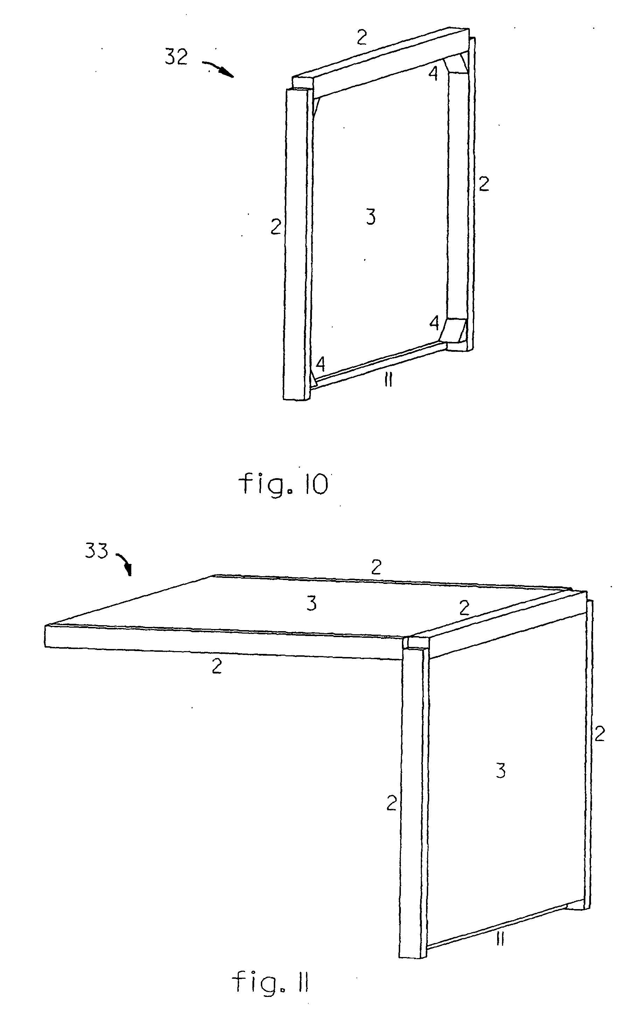

A vertical structural element 32 (Figure 10) likewise comprises three sections 2, between which a wall 3 is arranged. Three of the four sides of the vertical structural element 32 are thus closed off by a section 2, while the fourth side is open. This vertical structural element 32 is intended to be arranged vertically above a starter element 30 or above another vertical structural element 32 (Figure 12). Here too, two fastening elements 4 are already arranged on the open side of the vertical structural element 32, so that it can easily be joined to another basic module, likewise by tightening just two nuts 22 onto the corresponding coach bolts 21.

A honeycomb element 33 (Figure 11) is assembled from five sections 2 and two walls 3. This honeycomb element 33 is likewise L-shaped, both limbs being "open", i.e. not provided with a section 2 on their free end. Here too, two fastening elements 4 are already arranged on each open side (two open sides) of the honeycomb element 33, so that an open side can easily be joined to the starter element 30, to a neighbouring horizontal structural element 31, a neighbouring vertical structural element 32 or a neighbouring honeycomb element 33, by tightening just two nuts 22 onto the corresponding coach bolts 21.

Each basic module 31, 32, 33 can be constructed in various ways; the vertical sections may continue to the highest or lowest point of the basic module, or may not do so, the horizontal sections may continue to the furthest point of the basic module, or may not do so, the lateral sections may continue to the front and/or rear side of the basic module, or may not do so. In this case, whether sections continue to the front and rear sides of a basic module may differ.

With the aid of the above-described basic modules, the modular light shield 1 is assembled as described below (Figure 12). A starter element 30 is positioned at the bottom left, after which a number of horizontal structural elements 31 are arranged and fixed to the right of it, until the required width of the multi-screen display, i.e. of the modular light shield 1, is reached. The unit obtained in this way is adjusted until it is completely level. This can be carried out, for example, by means of legs 40 which can be screwed out. Then, the vertical structural elements 32 are arranged and fixed on top of the starter element 30, until the required height of the modular light shield 1 is reached, and then the honeycomb elements 33 are arranged and fixed. Each connection which is to be made is carried out simply by screwing a nut 22 tightly onto the corresponding coach bolt 21.

In Figure 12, the horizontal lines represent horizontal sections, the vertical lines represent vertical sections and the small circles represent lateral sections. Sections which in Figure 12 are shown directly against one another are joined together during pre-assembly with the aid of fastening elements 4. Where a small space is left in Figure 12 between the sections, the connections are made during final assembly.

Obviously, there are many other possibilities for pre-assembly.

For example, the complete arrangement can be constructed with the aid of honeycomb elements 33 (which are positioned upside down with respect to the arrangement shown in Figure 12), after which top walls 50 are arranged at the top, side walls 51 at the sides and finally a closing module 52 (Figure 13a) or a closing section 53 (Figure 13b) is attached. In Figures 13a, 13b and 13c the same arrangements with regard to the connections between the sections apply as in Figure 12.

For the embodiment shown in Figure 13a, it is necessary to assemble four different modules in advance. For an NxM arrangement (N high, M wide), NxM honeycomb elements 33 are required, as well as M-1 top walls 50, N-1 side walls 51 and one closing module 52.

For the embodiment shown in Figure 13b, only three different modules have to be assembled in advance: for an NxM arrangement, NxM honeycomb elements 33 are required, M top walls 50, N side walls 51 and one closing section 53.

Another possibility (Figure 13c) is to assemble only one type of honeycomb elements 33 in advance, and to provide lateral sections 54. This can only be used for an MxM arrangement. In that case, Mx(M+1) honeycomb elements 33 need to be assembled in advance. Furthermore, M+1 lateral sections 54 are also required for final assembly, which consists in constructing a triangle of honeycomb elements 33, M high, M wide, which are all placed in the same direction. Lateral sections 54 are then arranged on all open sides, after which the remaining honeycomb elements 33 are attached in an inverted manner.

Countless other combinations of optionally pre-assembled modules are possible.

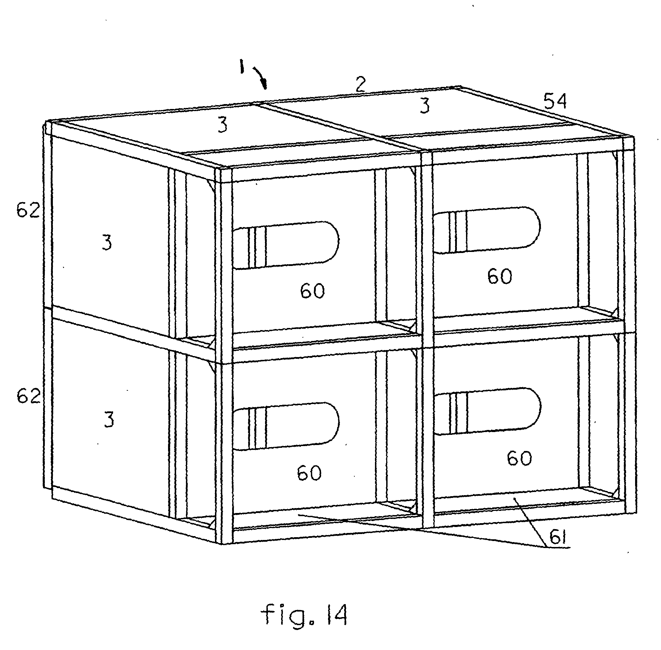

A rear wall 60 (Figure 14) of the modular light shield 1 may be optionally pre-mounted.

Figure 14 shows another preferred embodiment of a light shield 1 according to the invention, namely a light shield 1 which is provided with a support surface 61 for the projectors.

For this purpose, the lateral sections 54 of the light shield 1 continue towards the rear, and three vertical sections 2 are mounted per vertical light shield wall, instead of two. Possibly, an extra horizontal section 2 may also be mounted beneath each rear wall 60. The support or supports which form the support surface 61 for the projector may be optionally pre-mounted directly or indirectly on the horizontal and/or on the lateral and/or on the vertical sections 2. The position of the support surface 61 for the projector depends on the projector and the size of the screen 62.

The lateral sections do not have to continue all the way to the rear, but rather it is possible, for example, to attach an extra lateral section of a different length to the rear horizontal section.

The support surface 61 for the projector may be optionally pre-mounted directly or indirectly on the light shield in countless different ways. The support surface 61 may have any desired form.

After mounting the light shield 1, the projectors are placed on or suspended from the support surfaces 61. Each projector will transmit an image through a hole in the rear wall 60 onto the corresponding screen 62.

## Claims

1. Modular light shield (1) between image reproduction devices, built up by walls (3), so that only one wall (3) is present between two adjacent image reproduction devices, **characterized in that** the walls (3) are kept in position by means of horizontal, vertical and lateral sections (2), each of said sections (2) being provided with at least one groove (10) in the longitudinal direction of the section (2), and **in that** fastening elements (4) are provided, engageable into said grooves (10), for connecting said sections (2) with each other.

2. Modular light shield (1) according to Claim 1, **characterized in that** the sections (2) are extruded sections.

3. Modular light shield (1) according to one of the preceding claims, **characterized in that** the cross-section of the sections (2) is substantially square.

4. Modular light shield (1) according to one of the preceding claims, **characterized in that** the sections (2) are provided with at least one groove (10) on each side in the longitudinal direction of the section (2).

5. Modular light shield (1) according to one of the preceding claims, **characterized in that** the grooves (10) are T-grooves or dovetail grooves.

6. Modular light shield (1) according to one of the preceding claims, **characterized in that** the walls (3) are made from a material selected from sheet material, fabric, film.

7. Modular light shield (1) according to one of the preceding claims, **characterized in that** the sections (2) are provided with at least one recess (14) in which a wall (3) is located.

8. Modular light shield (1) according to one of Claims 1 to 5, **characterized in that** the walls (3) are folded aluminium sheets, the folded-over side of which is held in a groove (10) of a section (2).

9. Modular light shield (1) according to one of the preceding claims, **characterized in that** the fastening elements (4) are selected from the following combinations: corner piece (20) + 2 coach bolts (21) + 2 nuts (22), corner piece (20) + 2 quick-acting closures, corner piece (20) + 1 quick-acting closure + 1 coach bolt (21) + 1 nut (22).

10. Modular light shield (1) according to one of the preceding claims, **characterized in that** it is provided with means for suspending the unit.

11. Modular light shield (1) according to one of the preceding claims, **characterized in that** it is provided with support surfaces (61) for the projectors.

12. Method of constructing a modular light shield (1) so that only one wall is present between two adjacent image reproduction devices, **characterized in that** it comprises the following steps:
a) constructing a base,
b) adjusting the base until it is level,
c) constructing the light shield (1) with the aid of pre-assembled units (30, 31, 32, 33) comprising at least one wall (3) and at least one section (2), said section (2) being provided with at least one groove (10) in the longitudinal direction of the section, said wall (3) being connected with said section (2), the construction being carried out by connecting different sections (2) by means of fastening elements (4) which are engageable into the grooves (10),
d) attaching at least two screens (62), and
e) attaching at least two projectors.

## Patentansprüche

1. Modulare Lichtabschirmung (1) zwischen Bildwiedergabeeinrichtungen, welche durch Wände (3) so aufgebaut sind, dass nur eine Wand (3) zwischen zwei angrenzenden Bildwiedergabeeinrichtungen vorhanden ist, **dadurch gekennzeichnet, dass** die Wände (3) mittels horizontalen, vertikalen und seitlichen Profilen (2) in Position gehalten werden, wobei jedes Profil (2) mit mindestens einem Schlitz (10) in Längsrichtung des Profils (2) versehen ist, und dass Befestigungselemente (4), welche durch die Schlitze (10) in Eingriff genommen werden können, zum Verbinden der Profile (2) miteinander vorgesehen sind

2. Modulare Lichtabschirmung (1) nach Anspruch 1, **dadurch gekennzeichnet, dass** die Abschnitte (2) Strangpressprofile sind.

3. Modulare Lichtabschirmung (1) nach einem der vorhergehenden Ansprüche, **dadurch gekennzeichnet, dass** der Querschnitt der Profile (2) im wesentlichen quadratisch ist.

4. Modulare Lichtabschirmung (1) nach einem der vorhergehenden Ansprüche, **dadurch gekennzeichnet, dass** die Profile (2) mit mindestens einem Schlitz (10) auf jeder Seite in Längsrichtung des Profils (2) versehen sind.

5. Modulare Lichtabschirmung (1) nach einem der vorhergehenden Ansprüche, **dadurch gekennzeichnet, dass** die Schlitze (10) T-Schlitze oder Schwalbenschwanzschlitze sind.

6. Modulare Lichtabschirmung (1) nach einem der vorhergehenden Ansprüche, **dadurch gekennzeichnet, dass** die Wände (3) aus einem Material hergestellt sind, welches aus einem Blech, Stoff oder einer Kunststofffolie ausgewählt ist.

7. Modulare Lichtabschirmung (1) nach einem der vorhergehenden Ansprüche, **dadurch gekennzeichnet, dass** die Profile (2) mit mindestens einer Auskehlung (14) versehen sind, in welcher sich eine Wand (3) befindet.

8. Modulare Lichtabschirmung (1) nach einem der Ansprüche 1 bis 5, **dadurch gekennzeichnet, dass** die Wände (3) gefaltete Aluminiumbleche sind, deren umgefaltete Seite in einem Schlitz (10) eines Profils (2) gehalten wird.

9. Modulare Lichtabschirmung (1) nach einem der vorhergehenden Ansprüche, **dadurch gekennzeichnet, dass** die Befestigungselemente (14) aus den folgenden Kombinationen ausgewählt sind: Eckstück (20) + 2 Schlossschrauben (21) + 2 Schraubenmuttern (22), Eckstück (20) + 2 Schnellverschlüsse, Eckstück (20) + 1 Schnellverschluss + 1 Schlossschraube (21) + 1 Schraubenmutter (22).

10. Modulare Lichtabschirmung (1) nach einem der vorangehenden Ansprüche, **dadurch gekennzeichnet, dass** sie mit einer Vorrichtung zum Aufhängen der Einheit versehen ist.

11. Modulare Lichtabschirmung (1) nach einem der vorangehenden Ansprüche, **dadurch gekennzeichnet, dass** sie mit Auflageflächen (61) für die Projektoren versehen ist.

12. Verfahren zum Konstruieren einer modularen Lichtabschirmung (1), so dass nur eine Wand zwischen zwei angrenzenden Bildwiedergabeeinrichtungen vorhanden ist, **dadurch gekennzeichnet, dass** es die folgenden Schritte umfasst:
a) Konstruieren einer Grundfläche,
b) Justieren der Grundfläche, bis sie eben ist,
c) Konstruieren der Lichtabschirmung (1) mit Hilfe der im voraus zusammengebauten Einheiten (30, 31, 32, 33), welche mindestens eine Wand (3) und mindestens ein Profil (2) umfassen, wobei das Profil (2) mit mindestens einem Schlitz (10) in Längsrichtung des Profils versehen ist, wobei die Wand (3) mit dem Profil (2) verbunden ist, die Konstruktion durch Verbinden verschiedener Profile (2) mittels der Befestigungselemente (4)ausgeführt wird, welche durch die Schlitze (10) in Eingriff genommen werden können,
d) Anbringen von mindestens zwei Bildschirmen (62), und
e) Anbringen von mindestens zwei Projektoren.

## Revendications

1. Pare-lumière modulaire (1) entre des dispositifs de reproduction d'image, constitué de parois (3), de sorte qu'une seule paroi (3) est présente entre deux dispositifs de reproduction d'image adjacents, **caractérisé en ce que** les parois (3) sont maintenues en position au moyen de sections horizontales, verticales et latérales (2), chacune desdites sections (2) étant munie d'au moins une gorge (10) selon la direction longitudinale de la section (2), et **en ce que** des éléments de fixation (4) sont prévus, insérables dans lesdites gorges (10), pour raccorder lesdites sections (2) les unes aux autres.

2. Pare-lumière modulaire (1) selon la revendication 1, **caractérisé en ce que** les sections (2) sont des sections extrudées.

3. Pare-lumière modulaire (1) selon l'une des revendications précédentes, **caractérisé en ce que** la section transversale des sections (2) est sensiblement carrée.

4. Pare-lumière modulaire (1) selon l'une des revendications précédentes, **caractérisé en ce que** les sections (2) sont munies d'au moins une gorge (10) de chaque côté selon la direction longitudinale de la section (2).

5. Pare-lumière modulaire (1) selon l'une des revendications précédentes, **caractérisé en ce que** les gorges (10) sont des gorges en forme de T ou des gorges en queue d'aronde.

6. Pare-lumière modulaire (1) selon l'une des revendications précédentes, **caractérisé en ce que** les parois (3) sont réalisées à partir d'un matériau choisi parmi un matériau en feuille, du tissu, un film.

7. Pare-lumière modulaire (1) selon l'une des revendications précédentes, **caractérisé en ce que** les sections (2) sont munies d'au moins un évidement (14) dans lequel est positionnée une paroi (3).

8. Pare-lumière modulaire (1) selon l'une des revendications 1 à 5, **caractérisé en ce que** les parois (3) sont des feuilles d'aluminium pliées, dont le côté replié est maintenu dans une gorge (10) d'une section (2).

9. Pare-lumière modulaire (1) selon l'une des revendications précédentes, **caractérisé en ce que** les éléments de fixation (4) sont choisis parmi les combinaisons suivantes : un bloc d'angle (20) + 2 boulons à tête en goutte-de-suif et collet carré (21) + 2 écrous (22), un bloc d'angle (20) + 2 fermetures à action rapide, un bloc d'angle (20) + 1 fermeture à action rapide + 1 boulon à tête en goutte-de-suif et collet carré (21) + 1 écrou (22).

10. Pare-lumière modulaire (1) selon l'une des revendications précédentes, **caractérisé en ce qu'**il est muni d'un moyen pour suspendre l'ensemble.

11. Pare-lumière modulaire (1) selon l'une des revendications précédentes, **caractérisé en ce qu'**il est muni de surfaces de support (61) pour les projecteurs.

12. Procédé de construction d'un pare-lumière modulaire (1) de sorte qu'une seule paroi est présente entre deux dispositifs de reproduction d'image adjacents, **caractérisé en ce qu'**il comprend les étapes suivantes consistant à :
a) construire un socle,
b) régler le socle jusqu'à ce qu'il soit de niveau,
c) construire le pare-lumière (1) à l'aide d'unités pré-montées (30, 31, 32, 33) comprenant au moins une paroi (3) et au moins une section (2), ladite section (2) étant munie d'au moins une gorge (10) selon la direction longitudinale de la section, ladite paroi (3) étant raccordée à ladite section (2), la construction étant réalisée en raccordant différentes sections (2) au moyen d'éléments de fixation (4) insérables dans les gorges (10),
d) fixer au moins deux écrans (62), et
e) fixer au moins deux projecteurs.
